# EUROPEAN PATENT SPECIFICATION

(11) **EP 4 081 852 B1**
(45) Date of publication and mention of the grant of the patent: **26.02.2025**
(21) Application number: 20830226.5
(22) Date of filing: 18.12.2020
(51) Int. Cl.: G02C 5/04, G02C 5/14, G02C 5/20, G02C 1/08

(54) **DEVICE FOR FIXING COMPONENT PARTS OF FRAMES FOR SPECTACLES AND SPECTACLES INCLUDING THE FIXING DEVICE**
VORRICHTUNG ZUM BEFESTIGEN VON BAUTEILEN VON BRILLENGESTELLEN UND BRILLE MIT EINER SOLCHEN FIXIERVORRICHTUNG
DISPOSITIF DE FIXATION DE PARTIES CONSTITUTIVES DE MONTURES DE LUNETTES ET LUNETTES COMPRENANT LE DISPOSITIF DE FIXATION

(30) Priority: 23.12.2019 IT 201900025387
(43) Date of publication of application: 02.11.2022
(73) Proprietor: Safilo Società Azionaria Fabbrica Italiana Lavorazione Occhiali S.p.A., 35129 Padova (IT)
(72) Inventor: ARTUSI, Ampelio, 30033 Scaltenigo (VE) (IT); THORSELL, Eric, Portland, Oregon 97206 (US); MANERA, Giorgio, 35129 Padova (IT)
(74) Representative: Fabris, Stefano
(86) International application number: PCT/EP2020/087272
(87) International publication number: WO 2021/130137

(56) References cited:
- WO-A1-2014/126078
- KR-A- 20080 096 972
- US-A1- 2009 135 370
- US-A1- 2013 077 041

## Description

### Technical field

The present invention relates to a device for fixing component parts of frames for pairs of spectacles.

The invention further relates to pairs of spectacles including the fixing device.

### Technological background

The invention particularly relates to the field of spectacles, in which there is provision for the assembly of component parts of the frame by way of mutual fixing means and devices.

The term "component parts of the frame" is intended to be understood in the present context to be any component which can be located in a frame, for example, the articulation lug of the arms of the spectacles or the nose support bridge which extends so as to centrally connect the lens-carrying rims, or each of the half-frame lens-carrying front portions, or each of the arms or parts thereof, or the hinge for articulating the arm to the lug, or each of the lens-carrying rims or parts thereof. Pairs of these component parts, which are contiguous with each other in the frame, can be mutually connected in a permanent or releasable manner by way of suitable fixing means in order to construct the frame of the pair of spectacles.

Patent application US2009135370A1 discloses a related fixing device.

### Description of the invention

A main object of the invention is to provide a fixing device between component parts of frames for pairs of spectacles which is effective for simple and rapid assembly of the frame, but which at the same time ensures adequate retention between the parts connected, both if there is provided a fixing system of the permanent type and if it is desirable to have a fixing of the reversible type.

Another object is to provide a fixing device between component parts of frames which makes a dimension, for example, the length, of the component particularly adjustable.

This object and other objects which will be appreciated more clearly below are achieved by a device having the features defined in the appended claims.

According to a first aspect of the invention, there is provided a device for mutually fixing component parts of a frame for spectacles, the device comprising a first fixing element which can be associated with a first component part of a frame and which is capable of being connected by sliding coupling inside a second fixing element which can be associated with a second component part of a frame, and locking means which are active between the first and second fixing elements, transversely to the coupling direction, for mutually fixing the first and second component parts of a frame, the first fixing element comprising at least a first seat which is capable of slidingly receiving a respective first magnet, in a transverse direction relative to the coupling direction, the at least first seat being open towards the second fixing element, and the second fixing element comprising a second magnet and a second seat which is open towards the first fixing element, the second magnet being provided near the second seat and the second seat having such an extent as to receive, with reduced connection play, at least in the coupling direction, a portion of the first magnet when the first magnet is moved, with partial extraction from the first seat, by the magnetic attraction force between the first and second magnets produced by the mutual positioning of the first and second magnets with opposite magnetic polarities so that the first magnet, by engaging the first seat and the second seat, prevents the relative movement between the first fixing element and the second fixing element, in order to produce a relative locking between the elements.

According to another aspect of the invention, the first fixing element comprises a plurality of the first magnets which are arranged in a respective plurality of the first seats, there being slidingly received in each of the first seats the respective first magnet, in a transverse direction relative to the coupling direction, the first seats being open towards the second fixing element, and aligned with each other in the coupling direction with a predetermined spacing from each other, so that the engagement of one of the first magnets in the second seat, when magnetically attracted by the second magnet, produces a locking between the fixing elements of the type which can be adjusted in the coupling direction.

According to another aspect of the invention, there is provision for the first seats to be aligned with regular pitch in the first fixing element.

According to another aspect of the invention, there is provision for the second magnet to be associated with a push-button control which is provided on the second fixing element, the push-button being capable of urging the second magnet, in a transverse direction relative to the coupling direction, counter to a resilient return means which acts on the push-button, between a first position, in which, with the push-button released, the first magnet which is magnetically connected to the second magnet is engaged in the first seat and in the corresponding second seat for the relative locking between the fixing elements, and a second position, in which, with the push-button pressed, the first magnet, with magnetic attraction with the second magnet, is moved, by an external pressing action on the push-button, completely inside the corresponding first seat in order to allow the relative sliding movement between the first fixing element and the second fixing element in the coupling direction.

According to another aspect of the invention, the device comprises a slider type control member which is slidingly guided on the second fixing element in the coupling direction, there being provided in the slider type member the second magnet and a third magnet, which are aligned with each other with predetermined spacing from each other, and which are positioned with respective opposite polarities in the transverse direction relative to the coupling direction, the slider type member being movable in translation between a first position, in which there is mutual magnetic connection between the second magnet and the corresponding first magnet, in order to produce the relative locking between the fixing elements, and a second position, in which there is mutual repulsion between the third magnet and the corresponding first magnet so that the corresponding first magnet is moved completely inside the corresponding first seat in order to allow the relative sliding movement between the first fixing element and the second fixing element in the coupling direction.

According to another aspect of the invention, the device comprises a control member which is rotatably supported on the second fixing element about a rotation axis which is directed transversely relative to the coupling direction, there being provided on the control member the second magnet and a third magnet, which are diametrically aligned with each other and arranged in specularly symmetrical positions with respect to the rotation axis, and having opposite magnetization polarities in the direction parallel with the rotation axis, the control member being rotatable from a first angular position, in which there is mutual magnetic connection between the second magnet and the corresponding first magnet, in order to produce the relative locking between the fixing elements, and a second angular position rotated through 180° with respect to the first position, in which there is mutual magnetic repulsion between the third magnet and the corresponding first magnet, so that the first magnet is moved completely inside the corresponding first seat in order to allow the relative sliding movement between the first fixing element and the second fixing element in the coupling direction.

According to another aspect of the invention, there is provision for the device to comprise a control member which is rotatably supported on the second fixing element about a rotation axis which is directed transversely relative to the coupling direction, there being provided on the control member the second magnet which is centred on the rotation axis and which has opposite magnetization polarities in the direction perpendicular to the rotation axis, the control member being rotatable from a first angular position, in which there is mutual magnetic connection between the second magnet and the corresponding first magnet, in order to produce the relative locking between the fixing elements, and a second angular position rotated through 180° with respect to the first position, in which there is mutual magnetic repulsion between the second magnet and the corresponding first magnet, so that the first magnet is moved completely inside the corresponding first seat in order to allow the relative sliding movement between the first fixing element and the second fixing element in the coupling direction.

According to another aspect of the invention, there are provided pairs of spectacles comprising a frame including a front mount for supporting respective lenses and side arms which are connected in a hinged manner to the front mount, and a fixing device between component parts of the frame, constructed according to one or more of the preceding aspects.

According to another aspect of the invention, the component parts of the frame comprise a first part and a second part of each of the side arms. According to another aspect of the invention, the component parts of the frame comprise a lens-carrying rim of the front mount and the central connection bridge between the lens-carrying rims.

According to another aspect of the invention, the component parts of the frame comprise ends of a lens-carrying rim, which face each other in the region of an interruption of the rim, the fixing device bringing about the closure of the ends for retaining the lens in the rim.

### Brief description of the drawings

The features and advantages of the invention will be better appreciated from the following detailed description of a number of preferred embodiments thereof which are illustrated by way of non-limiting example with reference to the appended drawings, in which:
- Figure 1 is a perspective view of an embodiment of pairs of spectacles provided with a device for fixing component parts of the frame which is constructed according to the present invention,
- Figure 2 is a partial perspective view, drawn to an enlarged scale and in a partially sectioned manner, of a component part of the frame of Figure 1 provided for fixing with the device of the invention,
- Figures 3 and 4 are a partial plan view and side view of the component of Figure 2, respectively,
- Figures 5 and 6 are a side view and a plan view of a detail of the component part of the frame of Figure 2, respectively,
- Figures 7 and 8 are a side view and a plan view of another detail of the component part of the frame of Figure 2, respectively,
- Figure 9 is a front view of the detail of Figures 7 and 8,
- Figure 10 is a schematic plan view, in a partially sectioned manner, of the component part of Figure 2, in an operating state of the device of the invention,
- Figures 11 and 12 are side views drawn to an enlarged scale and in a partially sectioned manner of a detail of the preceding Figures in an embodiment,
- Figure 11A is a view corresponding to the view of Figure 11 in a construction variant of the detail depicted,
- Figures 11B and 11C are side views drawn to an enlarged scale and partially sectioned of additional construction variants of the detail shown in Figure 11A,
- Figures 13 to 15 are views corresponding to the view of Figure 10, in which the component part of the frame is shown in a sequence of different conditions in relation to the operation of the device of the invention,
- Figure 16 is a plan view, in a partially sectioned manner, of a construction variant of a detail of the component part of the preceding Figures,
- Figure 16A is a view corresponding to the view of Figure 16 of a construction variant of the detail depicted,
- Figure 17 is a plan view, in a partially sectioned manner, of a construction variant of the device of the invention,
- Figure 18 is a side view, drawn to a reduced scale, of the device of Figure 17,
- Figure 19 is a plan view, in a partially sectioned manner, of the device of Figure 17 in a different operating condition,
- Figure 20 is a side view, drawn to a reduced scale, of the device of Figure 19,
- Figures 21 and 22 are views corresponding to the views of Figures 17 and 18 of another construction variant of the device of the invention,
- Figures 23 and 24 are views corresponding to the views of Figures 19 and 20 of the construction variant of the device of Figure 21,
- Figures 25 and 26 are views corresponding to the views of Figures 21 and 22 of another construction variant of the device of the invention,
- Figures 27 and 28 are views corresponding to the views of Figures 23 and 24 of the construction variant of the device of Figure 25,
- Figures 29 and 30 are views corresponding to the views of Figures 26 and 28 of another construction variant,
- Figures 30A and 30B are views corresponding to the views of Figures 29 and 30 of another construction variant,
- Figure 31 is a side view of another construction variant of a detail of the component part of the frame of Figure 2,
- Figure 32 is a side view of the component part of the frame in the variant of Figure 31,
- Figure 33 is a side view of another detail of the construction variant of Figure 32,
- Figure 34 is a plan view of the detail of Figure 33,
- Figure 35 is a plan view of the construction variant of Figure 32,
- Figure 36 is a plan view, in a partially sectioned manner, of the construction variant of Figure 32,
- Figure 37 is a partial cross-section of another example of a pair of component parts of a frame provided for mutually fixing with the device of the invention,
- Figure 38 is a partial cross-section of another example of a pair of component parts of a frame provided for mutually fixing with the device of the invention.

### Preferred embodiments of the invention

With reference to the Figures cited, there are generally designated 1 a pair of spectacles with a frame 2, in which one or more pairs of component parts are mutually fixed by means of a fixing device, which is generally designated 3 and which is constructed according to the present invention.

The frame 2 comprises a front mount with a pair of lens-carrying rims 4 for supporting respective lenses, a pair of articulation arms 5 and a central bridge 5a for centrally connecting the lens-carrying rims.

At each of the opposite lateral ends of the front mount, each arm 5 is articulated in a hinge-like manner with a respective frame element 5b which is also known by the term "lug" in the specific technical field. The hinge-like connection can be provided, for example, by means of a hinge pin which is engaged in eyelets which are formed at the corresponding ends facing each pair involving a lug and arm.

The term "component part of the frame" is intended to be understood in the present context to identify any single component such as, for example, the front mount (or each half-mount of the respective lens-carrying rim), the central connection bridge for the lens-carrying rims, each of the arms or parts thereof (for example, the arm end),each articulation lug, each articulation hinge of the arms, each lens-carrying rim or parts thereof, the present invention relating to the common fixing device 3 for mutually connecting pairs of such frame components or parts thereof provided in a contiguous position relative to each other.

There will be described below in detail a first embodiment of the fixing device 3 which is provided in the frame, for example, for fixing two arm portions 5, a first portion 6a having an arm end and a second portion 6b being capable of articulation to the corresponding lug element 5b by means of the hinge pin.

It will be understood that each arm 5 is provided with a fixing device 3, only one of which is described below for reasons of their substantial structural identity and the symmetrical positioning on the frame.

The device 3 comprises a first fixing element which is associated with the arm portion 6a and which is capable of being connected by axial sliding coupling in a direction designated X inside a second fixing element which is associated with the arm portion 6b. Locking means are active between the first and second fixing elements, transversely to the axial sliding direction X, for mutually locking the arm portions 6a, 6b.

More specifically, the second fixing element is formed as a box-shaped member 7, the internal cavity 8 of which extending in the direction X receives with form-fitting connection and with limited connection play, the first fixing element which is in the form of a rod-like member 9 and which has a cross-section suitable for producing the sliding coupling, of the telescope-like type, between the fixing elements.

A quadrilateral formation (and preferably with a square or rectangular profile) of the cross-section of the rod-like member 9 constitutes a preferred selection, but other formations of the section are possible.

The first fixing element comprises at least one seat 10 and preferably a plurality of such seats 10, each seat being capable of slidingly receiving a respective magnet 11, the sliding direction of the respective magnet 11 in the individual seat 10 extending transversely and preferably perpendicularly to the direction X. Each seat 10 is in the form of an opening or blind hole which is provided in the member 9 and has a base 10a opposite an opening 10b, through which the seat opens in the cavity 8 of the box-shaped member 7.

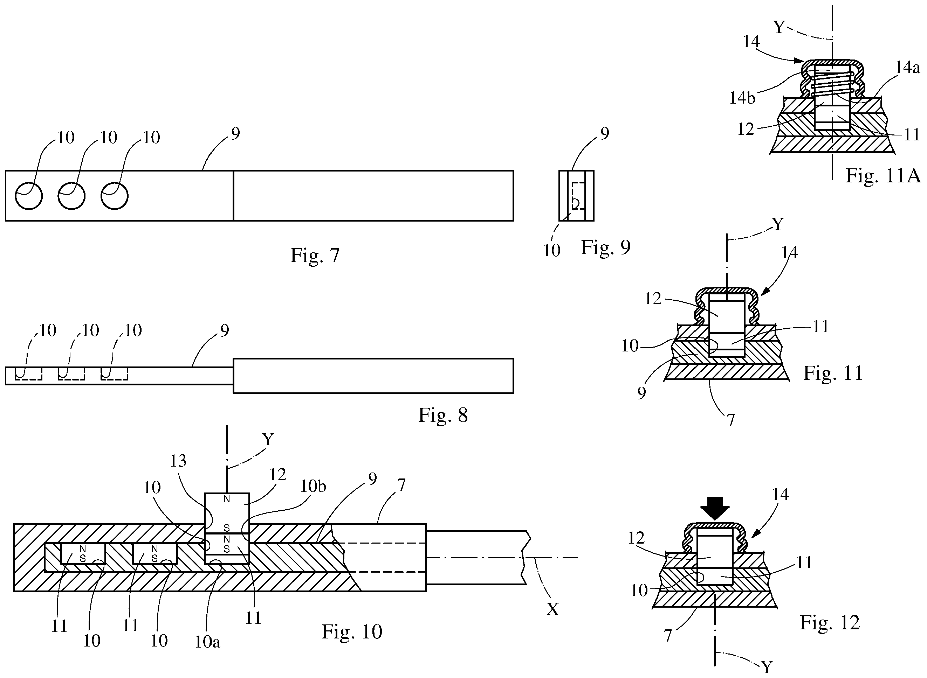

The sliding direction of the corresponding magnet 11 in relation to the individual receiving seat 10 is designated Y. The seats 10 are aligned with each other and adjacent to each other in the direction X with predetermined spacing from each other. One preferred embodiment provides for the seats 10 to be spaced apart from each other with regular pitch, as shown in Figure 8, with reference to an embodiment in which there are provided three seats 10 which are associated with three corresponding magnets 11, respectively.

The seats 10 and the magnets 11 are advantageously configured with a cross-section with a circular profile, but other profiles of the section are possible.

The second fixing element comprises a second magnet 12 and a second seat 13. In this embodiment (assembly of Figure 10), the seat 13 is constructed by an opening or through-hole in the covering of the box-shaped member 7 so as to be in communication with the cavity 8 and open towards the openings 10b of the seats 10.

In greater detail, during the relative movement in the direction X between the pair of fixing elements, the seat 13 can be brought into the region of the opening of any of the seats 10, therefore being in communication with the corresponding preselected seat 10.

The magnet 12 is provided on the box-shaped member 7 near the seat 13, and is further slidingly received in the seat 13 in a direction parallel with the direction Y. Furthermore, the magnet 12 is arranged on the member 7 with a magnetization direction which is coherent with the magnetization direction of the magnets 11, consequently the magnetic poles of the magnet 12 and the corresponding magnet 11 facing each other (when the seat 13 is in the region of the respective seat 10) are opposite each other, bringing about a mutual magnetic attraction action. In the Figures, the north and south polarity zones of the magnetic field are designated "N" (North) and "S" (South).

As a result of this configuration with magnetization with opposite poles, the magnet 12 and the corresponding magnet 11, when brought into mutual correspondence (aligned parallel with the direction Y), attract each other.

There is further provision for the seat 13 to have such an extent as to receive, with reduced coupling play, in particular in the direction X, a portion of the corresponding magnet 11 when the magnet 11 is moved with partial extraction from the individual seat 10, by the magnetic attraction force present between the pair of magnets 11, 12 in a facing position (related to the mutual positioning with opposing magnetic polarity).

Following this movement, the corresponding magnet 11 is capable of simultaneously engaging with portions of the seat 10 and portions of the seat 13, therefore preventing the relative movement between the fixing elements in the coupling direction X, and consequently bringing about the relative locking between the fixing elements. In other words, the portion of the magnet 11 which projects from the individual seat 10 and which is received in the seat 13 acts as a securing element for the relative movement between the fixing elements in the direction X.

Figure 10 shows the above-mentioned locking condition, in which the corresponding magnet 11 following the magnetic attraction with the magnet 12 is moved by engaging with a portion of the seat 13 so as to block the relative movement between the fixing elements of the arm portions 6a, 6b.

As a result of the provision of a plurality of seats 10 with respective magnets 11 in the rod-like member 9, the arm portions 6a, 6b can be mutually locked in a plurality of positions, thereby making the overall length of the rod 6 adjustable. The number of adjustment positions depends clearly on the number of magnets 11 provided in the rod-like member 9. In the embodiment described, the provision of three magnets 11 allows adjustment with three different relative positions between the arm portions.

The device 3 further comprises a push-button control 14 which is associated with the magnet 12 on the box-shaped member 7 in order to press the magnet 12 in the direction Y (transversely to the axial coupling direction X) counter to a resilient return means which acts on the push-button.

In an embodiment, the body of the push-button 14 can be configured in the manner of a sphere or cap of resilient material (for example, made from rubber or soft plastics material) which covers the magnet 12 and which is secured thereto.

The magnet 11 is therefore movable in the direction Y between a first position, in which, with the push-button 14 released, the magnet 11 which is connected to the magnet 12 magnetically, is engaged with both the seats 10, 13 so as to produce the relative locking of the arm portions 6a, 6b, and a second position, in which, with the push-button 14 pressed, the magnet 11 is moved by the magnet 12 (on pressing action of the push-button) completely inside the individual seat 10, in order consequently to allow the relative sliding movement between the fixing elements (and therefore of the arm portions) in the axial direction X. It will be understood that, in this second position, the magnet 12 which is moved by the action of the push-button 14 remains over the travel thereof inside the individual seat 13 without therefore interfering with the rod-like member 9, which can therefore slide in relation to the box-shaped member 7 in the direction X.

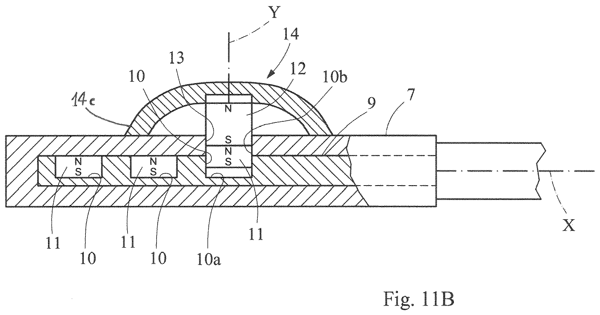

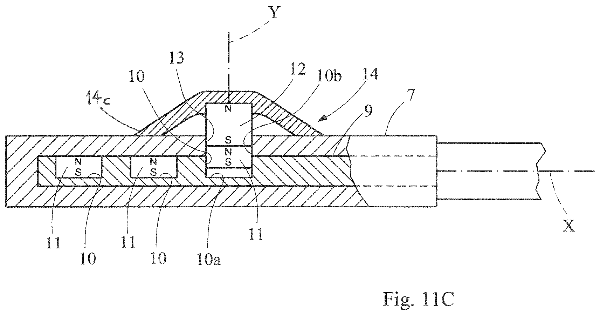

With the push-button 14 pressed (Figure 12), a portion of the arm 6 can therefore be moved in translation (in the direction X) with respect to the other arm portion until reaching an additional relative position (in which the seat 13 is in the region of the preselected seat 10), in which, with the push-button released (Figure 11), the relative locking between the arm portions is brought about as a result of the engagement of the magnet 11, with partial extraction from the individual seat 10, in the seat 13 of the box-shaped member.

The resilient return means is provided and is active on the push-button so as to limit the extent of the movement of the magnet 12 in the direction Y inside the seat 13.

With regard to the resilient return means, it may be constituted by one or more conventional springs 14a, for example, of the type constructed from metal wire which is wound in multiple turns beside each other and which is applied inside the push-button. An embodiment is shown in Figure 11A.

The spring(s) can in fact have such dimensions that in the position with the push-button released it/they is/are in the rest position (that is to say, without any stresses) and that it/they therefore maintain(s) the magnet 12 stably in the partial engagement position both of the seat 13 and of the seat 10.

When the push-button is pressed, it is clearly necessary for the spring or springs, by being compressed, to be able to be subjected to a deformation sufficient to allow the magnet 11 to arrive in contact with the base 10a of the seat 10 or in any case to be able to completely disengage the seat 13 in order to engage only the seat 10.

Once the push-button has been released, the resilient reaction of the spring(s) acts as a return force, bringing the magnet 12 back and consequently also the magnet 10, which is attracted by the magnet 12, into the locking position. With regard to the positioning of the spring(s), it/they can be contained inside the push-button together with the magnet 12, which are applied in adjacent positions in relation to the position of the same magnet 12, that is to say, laterally relative thereto.

Alternatively, there may be provided the more specific case, which is probably more advantageous if there is the objective of restricting the overall spatial requirement of the device, as given by the use of a single spring, which is selected so that the internal diameter thereof, that is to say, the internal diameter of the turns thereof, is greater than the maximum transverse dimension of the magnet 12.

In this case, the magnet 12 can be at least partially contained in the empty space subtended by the series of turns which constitute the spring. In this variant, one end of the spring is fixedly joined to the base surface of the push-button, while the opposite end is simply rested, without any fixed securing, on a surface of the box-shaped member 7, surrounding the opening of the seat 13. In fact, it is generally necessary for the spring(s) used with a function of resilient return means to locate a surface or in any case an abutment means which is constituted, for example, by the external surface of the box-shaped member 7 around the opening of the seat 13 in such a manner that, counter to the pressure applied to the push-button in order to obtain the movement of the magnet 12, the spring(s) can become compressed in order then to return resiliently to the initial shape thereof, once the push-button is released.

If necessary, there may optionally be provision for using a spacer element 14b having a maximum transverse dimension no greater than that of the magnet 12, the spacer also being contained in the empty space inside the spring, the spacer being interposed between the base surface of the push-button and the outermost surface of the magnet 12, the spacer further being fixedly joined both to the base surface of the push-button and to the magnet 12. The use of the spacer may be driven by the need to adapt the overall dimensions of the device to the length of the spring, particularly if the thickness of the magnet 12, that is to say, the dimension of the magnet 12 measured along the axis Y, is less than the length of the spring in the non-deformed condition.

Alternatively to the spring of metal wire, the resilient return means may be constituted by a deformable element 14c which is constructed from resiliently resilient material, such as, for example, a rubber, an elastomer material or a plastics material which is sufficiently soft and flexible.

The deformable element may have, for example, a shape similar to the shape of a truncated cone (therefore, with a cross-section with a circular perimeter), provided with internal cavities, with the greater base being directed towards the box-shaped member 7, and so as to receive the magnet 12 therein, similarly to what has been described above herein for the second variant of resilient means constituted by a spring of metal wire.

Alternatively, the deformable element may have a shape similar to the shape of a truncated pyramid with a square base, which is provided with internal cavities and which is orientated so as to turn the individual greater base towards the box-shaped member 7, and so as to receive the magnet 12 therein, similarly to what has been described above herein.

Alternatively, the deformable element may have a shape similar to the shape of a spherical cap, or also an ellipsoidal cap, or in any case similar to a cap with an oblong section, still with internal cavities, orientated so as to turn the individual concavity towards the box-shaped member 7, and so as to receive the magnet 12 therein, similarly to what has been described above herein.

Alternatively, the deformable element may have a cylindrical shape or a shape given by the combination between a cylindrical surface and a spherical cap, or similar geometries, still with internal cavities, and orientated so as to turn the individual concavity towards the box-shaped member 7, and so as to receive the magnet 12 therein, similarly to what has been described above herein.

Particularly for cases in which the shape selected for the resilient element is less suitable for deformation which causes it to move closer to the box-shaped member 7 along the axis Y, see, for example, the cylindrical shape, it is possible to provide in the member of the resilient element structures which are capable of reducing the resistance thereof to the resilient deformation, such as, for example: a series of slots or in any case discontinuities which are formed in the lateral walls; a single fold or also a series of folds which are obtained along the lateral wall(s) similarly to the folds typical of a set of bellows.

Alternatively, unlike the examples set out above, the deformable element may also have a shape characterized by a dimension which is developed to a greater extent with respect to all the others, such as, for example, the shape of a bridge or a bump (Figure 11B), with the upper portion of the bridge or the bump being directed in the opposite direction to the box-shaped member 7. In this case, the magnet 12 can be positioned in the space under the bridge-like or bump-like structure, which bridge or bump, being able to be resiliently deformed similarly to what is brought about for a bow or a crossbow, can move the top thereof towards or away from the box-shaped member along the axis Y, where applicable extending or shortening, with a resultant dimensional variation in terms of the transverse spatial requirement.

In principle, the bridge-like or bump-like resilient element can be applied to the box-shaped member 7 with any orientation, that is to say, the value of the potential angle formed between the longitudinal axis of the bridge or bump and the axis X, measured in the plane tangential to the surface of the box-shaped member 7 perpendicular to the axis Y, does not attach particular importance to the purposes of the operation of the device described.

However, it may be preferable to have an orientation of the bridge or bump parallel with the direction X, for example, for the purpose of containing the overall dimensions of the component part of the frame.

Finally, the deformable element may also have a lateral profile which is trapezoidal, with the largest base of the trapezium resting on the external surface of the box-shaped member 7, or a bow-like shape, remaining applicable similarly to what is described for the bridge-like or bump-like shapes (Figure 11C).

It may be noted how, for springs of the variants of a resilient element which is not constituted by a spring of metal wire wound in turns, it is possible to select whether to construct the resilient element and the push-button separately from each other or whether to alternatively construct a single means, in which the structure and the function of a resilient element and also of push-button control co-exist. The second option may comply with a need to reduce the complexity and/or the production costs of the device as a result of the smaller number of pieces to assemble.

If the push-button and the resilient element are formed from a single piece, the same considerations already set out for constructing the single resilient element to be constructed from resilient material apply in relation to all the possible variants for the shape of the piece or the possible provision of slots, folds and whatever contributes to increasing the deformability of the piece, where necessary.

Furthermore, if the push-button and the resilient element coincide in a single piece, it is also possible to give considerations of aesthetic character, that is to say, in relation to the external appearance to be attributed more advantageously to the visible portion of the device. For example, in the case of a push-button which is constructed with the shape of a bridge, bump, trapezium or bow, and which also performs the function of resilient return means, it may certainly be suggested that the orientation of the longitudinal axis of the piece be parallel with the axis X, thereby resulting in a more pleasing appearance of the assembly.

If the device is used not as a removable assembly system but instead as a system for adjusting the mutual arrangement of two component parts of a frame, it is possible to provide for retention means of a removable type (not illustrated) of the arm member 9 on the box-shaped member 7 which are capable of preventing, once the position corresponding to the adjustment to the maximum length is passed (deliberately or accidentally), the arm member 9 from being able to be completely removed from the box-shaped member 7, remaining secured thereto.

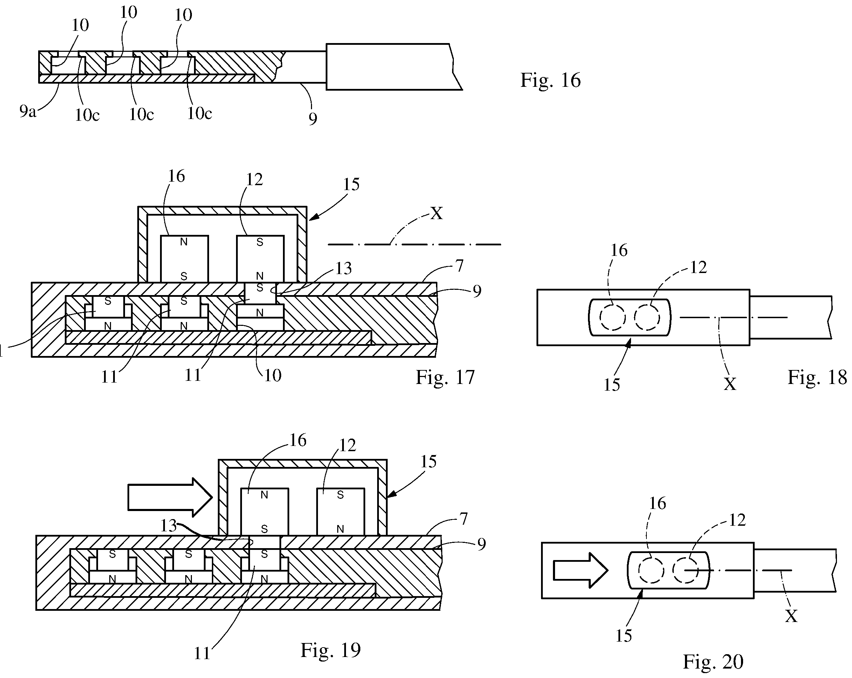

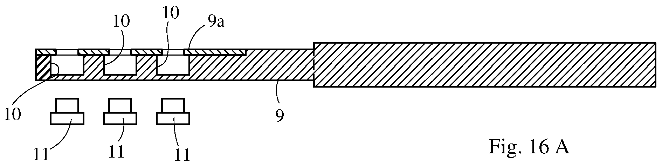

With reference to Figures 16-20, in a construction variant of the invention in which details similar to those of the preceding example are indicated using the same reference numerals, the device 3 as an alternative to the push-button 14 comprises a slider type control member 15 which is slidingly guided on the box-shaped member 7 of the second fixing element in the direction X. The magnet 12 and an additional magnet 16 are received in the slider type control member 15.

The magnets 12 and 16 are aligned with each other with a predetermined spacing from each other in the direction X and each have the individual magnetization direction (N-S) in the direction Y (that is to say, perpendicularly to the direction X) with opposing polarity relative to each other, as clearly shown in Figure 17.

Furthermore, the magnet 12 is arranged in the slider type member with a magnetization direction which is coherent with the magnetization direction of the magnets 11, as in the preceding example, and consequently the magnetic poles of the magnet 12 and the corresponding magnet 11 facing each other are opposing, bringing about a mutual magnetic attraction action.

Vice versa, the magnet 16 is arranged in the slider type member with a magnetization polarity which is opposite with respect to the magnet 12 and consequently the magnetic poles of the magnet 16 and the corresponding magnet 11 facing each other are coherent (S-S), bringing about a mutual magnetic repulsion action.

The magnets 12 and 16 are advantageously secured to the slider member 15 in such a manner that, during the translational travel thereof (in the direction X, in one direction and in the opposite direction), the slider member can be moved in translation between a first position, in which the magnet 12 is located in the region of the seat 13, and a second position, in which the magnet 16 is located in the region of the seat 13.

If, in the first position, one of the magnets 11 is moved into the seat 13, there is produced a magnetic attraction between the magnet 12 and the corresponding magnet 11, which brings about the locking condition between the fixing elements, with the method already described above.

From this locking condition, by moving the slider member 15 in translation into the second position, there is induced a magnetic repulsion action, between the magnet 16 and the corresponding magnet 11 facing it, by means of which the magnet 11 is urged completely inside the seat 10, so as to allow the relative sliding movement between the fixing elements in a manner generally similar to what has been described above.

Figure 16 shows a preferred formation of the rod-like member 9, in which the seats 10 are formed passing through the thickness of the member 9, a cover 9a being provided to be applied, in a removable manner, to the member 9 so as to close all the seats 10, defining the base 10a of each seat. The cover 9a can be advantageously received in a recess of the member 9 so as not to project beyond the profile of the member itself.

At the opening 10b, each seat 10 has internally an abutment 10c which is capable of opposing the removal of the magnet which is intended to be received in the seat. To this end, each magnet 11 is formed in two portions having diameters which are different from each other, the portion with the smaller diameter being sized to project from the opening 10b of the seat 10, the portion with the larger diameter abutting the abutment 10c inside the seat 10. During assembly of the magnets 11 on the member 9, the magnets are previously inserted into the corresponding seats 10, through the openings which are axially opposite the openings 10b, the subsequent application of the cover 9a to the member 9 completes the assembly, ensuring the retention of the magnets 11 inside the respective receiving seats 10.

A construction variant of the cover (9a) is shown in Figure 16A. Generally, the provision of a cover is advantageous particularly when it is desirable to construct the device in such a manner that, during the possible removal of the arm member 9 from the box-shaped member 7, it is impossible for the magnets 11 to accidentally be removed from the respective seats 10.

The advantage of obtaining a system for retaining the magnets 11 in the member 7 by using a cover may also be appreciable during the assembly step of the device (for example, during the assembly at the factory), in which step during transport the handling and the assembly operations of the pieces could lead to the undesirable removal of the magnets 11 from the seats 10 and movement away from the arm member 9.

It is known to this end how the provision of a cover 9a constitutes a possible option for all the construction variants set out herein, including the first embodiment described.

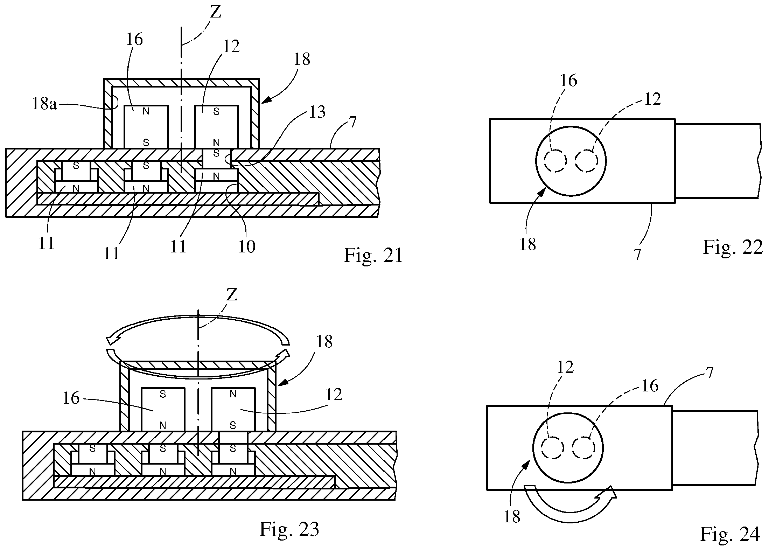

With reference to Figures 21-24, in an additional construction variant of the invention, in which details similar to those of the preceding variant are indicated using the same reference numerals, the device 3 differs in that it comprises, as an alternative to the slider type control member 15, a discoidal control member 18 which is rotatably supported on the box-shaped member 7 of the second fixing element, about a rotation axis Z. The rotation axis Z is directed perpendicularly to the axial sliding direction X.

The magnet 12 and the magnet 16 are received in the discoidal member 18 and are arranged with diametral alignment with each other, with respect to the axis Z, with predetermined spacing from each other, and devices in positions which are specularly symmetrical, with respect to the axis Z.

The discoidal member 18 may be advantageously formed as a roller which has an internal cavity 18a for receiving the magnets 12 and 16 which each have an individual magnetization direction (N-S) along the axis Y (perpendicularly to the direction X) with opposing polarities to each other, as clearly shown in Figure 21.

Furthermore, as in the preceding example, the magnet 12 has coherent polarities with respect to the polarities of the magnets 11, in the direction Y (so as to ensure a mutual attraction when the magnet 12 is located in an aligned position, in the direction Y, with respect to a corresponding magnet 11), while the magnet 16 has opposing polarities to the polarities of the magnets 11, in the direction Y (so as to ensure a mutual repulsion when the magnet 16 is located in an aligned position, in the direction Y, with respect to a corresponding magnet 11).

The magnets 12 and 16 are advantageously secured to the discoidal member 18 in such a manner that, during the rotation thereof (about the rotation axis Z, in one direction and in the opposite direction), the discoidal member 18 can be rotated between a first position, in which the magnet 12 is in the region of the seat 13, and a second position (rotated through 180° with respect to the first position), in which the magnet 16 is located in the region of the seat 13.

If, in the first position, one of the magnets 11 is moved into the seat 13, there is produced a magnetic attraction between the magnet 12 and the corresponding magnet 11, which produces the locking condition between the fixing elements, with the method already described above.

From this locking condition, by rotating the discoidal member 18 into the second position, there is induced a magnetic repulsion action between the magnet 16 and the corresponding magnet 11 facing it, by means of which the magnet 11 is urged completely inside the individual seat 10, allowing the relative sliding movement between the fixing elements in a manner generally similar to what has been described above.

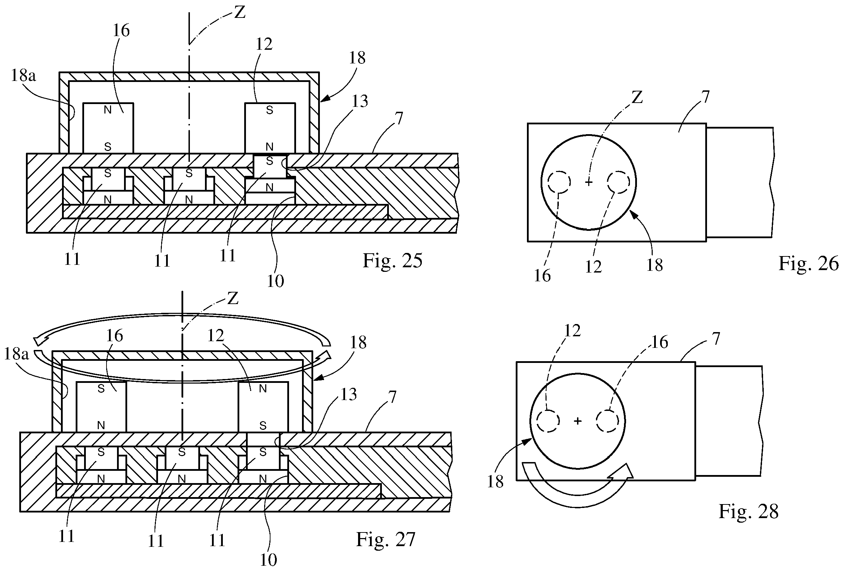

With reference to Figures 25-28, in an additional variant of the preceding embodiment, there is provision for the discoidal member 18 to have a circular profile with a greater diameter with respect to the diameter of the preceding example. In this manner, the magnets 12 and 16 can be positioned with radial spacing from the axis Z greater than the preceding example, the specularly symmetrical positioning of the magnets with respect to the axis Z remaining the same. The operating methods are generally equivalent with respect to the preceding example.

The advantage of varying and in particular increasing the dimensions of the roller type control member is connected with the fact of being able to associate rollers with dimensions which are proportional and/or coherent with respect to the dimensions of the arm member of another component on which the roller is mounted.

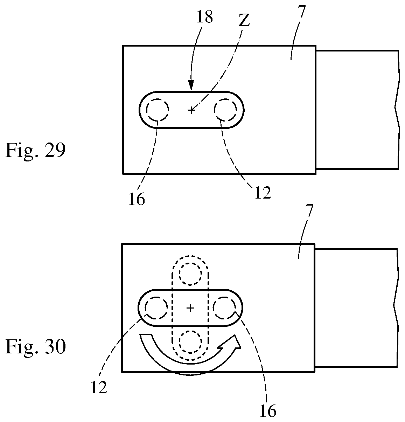

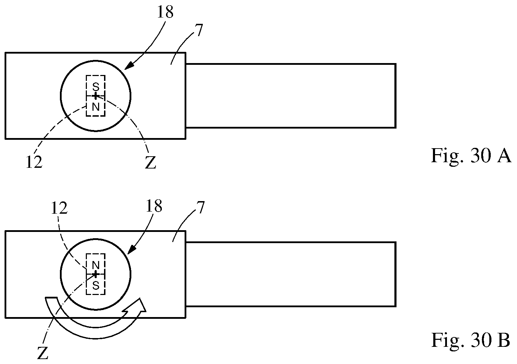

With reference to Figures 29 and 30, the views of which correspond to those of Figures 26 and 28, another variant provides for a rotational control member, but in which the actuator means of the control member, as an alternative to the discoidal member, comprises an oblong member (also designated 18) which is rotatably supported on the box-shaped member 7 about the axis Z with the two magnets 12 and 16 provided in positions corresponding to those of the preceding last examples and for which the same operating principle is maintained.

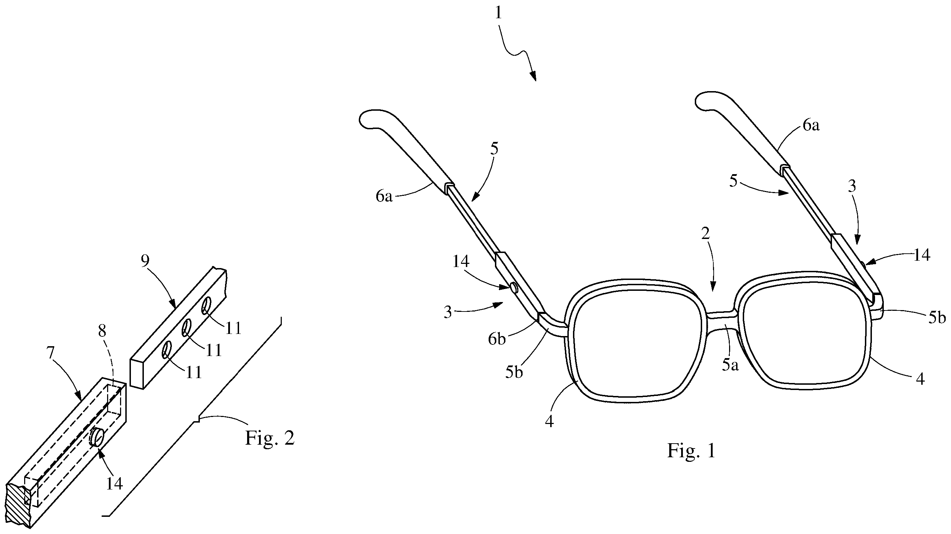

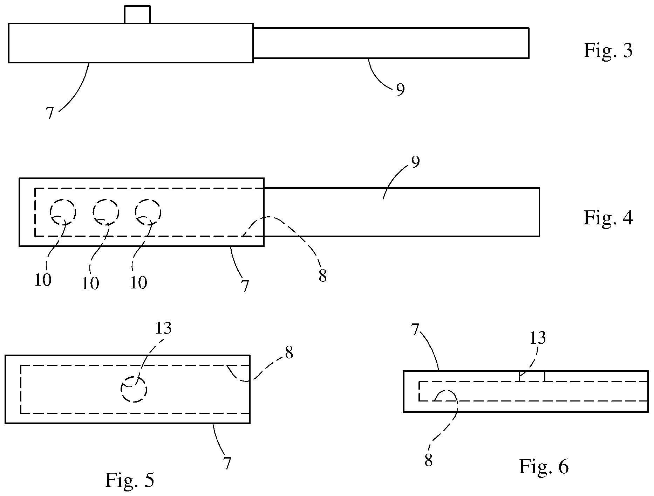

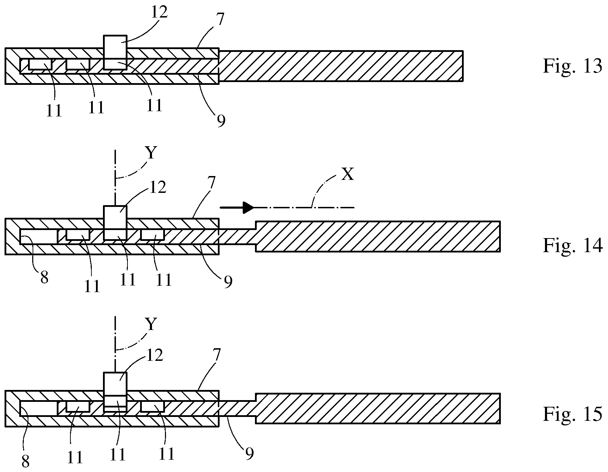

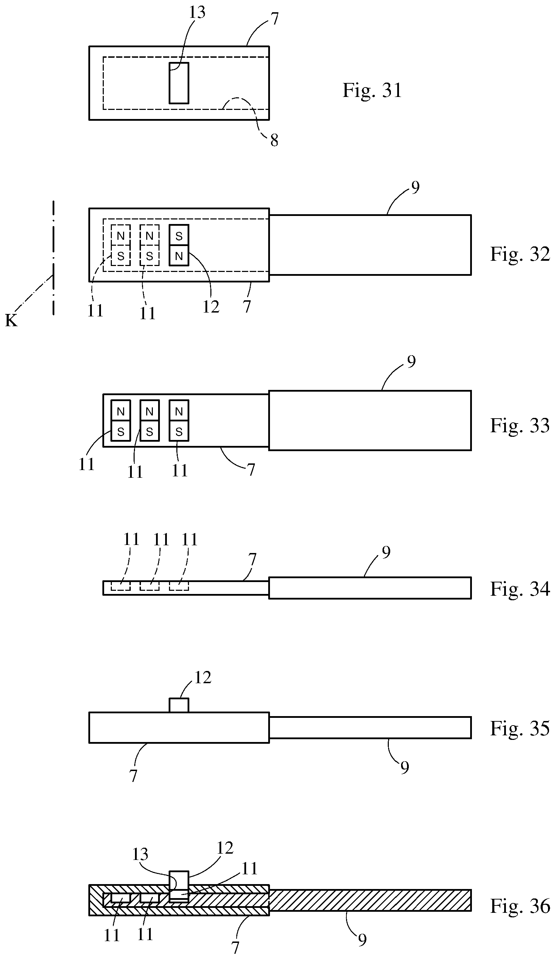

With reference to Figures 31 to 36, in another construction variant of the invention in which details similar to those of the variant of Figures 2 to 15 are indicated with the same reference numerals, the device 3 differs in that each magnet 11, instead of having a polarity orientated mainly in a direction parallel with the axis Y, is polarized in a direction parallel with an axis K, which is perpendicular to both the axis X and the axis Y.

In this last example, each magnet 11 has both the individual poles (S-N) which are directed, on the one hand, towards the wall of the box-shaped member 7 to which the push-button is applied and, on the other hand, towards the wall of the box-shaped member which is opposite the push-button, wherein all the magnets 11 provided in the device have the same direction and the same polarization direction (Figure 33).

In this example, similarly to the basic characteristics of the first embodiment described above, the magnet 12 is also polarized with a polarization axis parallel with the axis K, having an opposite polarization direction with respect to that of the magnet 11 or the magnets 11. The operating principle of the device of this example remains the same, already on the basis of the operation described for the first embodiment, with the difference in terms of details in that the magnetic interaction which from time to time brings about the positions and the movements of the magnet 11 or magnets 11 is not brought about here between single poles, but instead between pairs of opposing poles.

Similarly to what has already been described for the possible variants of the first embodiment, for this last embodiment it is also possible to provide a push-button control member, using a single magnet 12, or a slider type control member using a magnet 12 and a magnet 16, or a discoidal control member using a magnet 12 and a magnet 16, or a control member which is non-discoidal but in any case rotatable using a magnet 12 and a magnet 16. In the case of the push-button member being used, all the considerations already set out for the first embodiment further remain still valid as a result of the possibility of providing in the device at least one resilient return means which is constituted, for example, by a spring or by a deformable element made from non-metallic resilient material.

In another construction variant, which may advantageously be used, for example, in the device of Figure 32, there is provision for the discoidal member 18 which is rotatably supported about the axis Z, to receive in the internal cavity thereof the single magnet 12 which is positioned in the region of the seat 13. The magnet 12 is mounted in a position centred on the rotation axis and has opposite magnetization polarities in the direction perpendicular to the rotation axis so that the magnetic interaction is brought about between the pair of opposite poles present in the magnet 12 and the corresponding pair of magnetic poles of the corresponding magnet 11.

The discoidal control member can be rotated between a first position (Figure 30B), in which there is produced a magnetic attraction between the magnet 12 and the corresponding magnet 11 which is brought into correspondence with the seat 13 (locking condition between the fixing elements), and a second position (rotated through 180° - Figure 30A), in which there is produced a magnetic repulsion action between the magnet 12 and the corresponding magnet 11 facing it, by means of which the magnet 11 is urged completely inside the individual seat 10, allowing the relative sliding movement between the fixing elements in a generally similar manner to what has been described above.

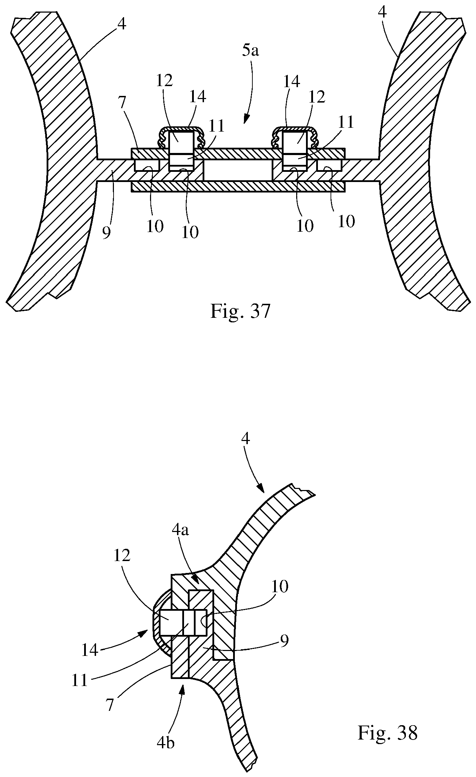

Figure 37 schematically depicts an additional application of the fixing device of the invention. The device 3, in any of the embodiments described above, can be configured for fixing each lens-carrying rim 4 to the central bridge 5a. Therefore, there is provision for a pair of devices, which are structurally and functionally equivalent to each other and which are arranged in specularly symmetrical positions with respect to a centre plane of symmetry of the bridge 5a.

Each device 3 comprises a first fixing element (rod-like member 9) which is associated with the corresponding rim 4 and which is capable of connection by axial coupling, in the second fixing element associated with the bridge (box-shaped member 7). There may be provided a single box-shaped member 7 which is provided to be connected with coupling, at the individual opposite axial ends, to each respective rod-like member 9 which is fixedly joined to the corresponding rim 4, as clearly shown in Figure 29.

Figure 37 illustrates the device 3 in the construction variant including the control push-button 14, but it is possible to provide as an alternative any of the versions described above, particularly by providing a slider type or roller type control member.

If a plurality of magnets 11 with respective receiving seats 10 are provided in the device 3, the length of the central bridge 7 which determines the spacing between the lens-carrying rims 5 can be made adjustable, the extent of the adjustment range depending on the number of magnets 11 provided in the device and the pitch thereof.

Figure 38 schematically illustrates an additional application of the fixing device of the invention.

In this application, the device 3 is provided for fixing two ends 4a, 4b of the lens-carrying rim 4 which face each other at an interruption of the rim itself. This application allows closure of the lens-carrying rim with a rapid and reversible locking which is particularly suitable for interchangeable lenses. The operating method is the same as the one already described above with reference to the preceding examples.

The invention thereby achieves the objectives set out, affording a number of advantages with respect to the known solutions.

A main advantage involves the fact that, as a result of the fixing device of the invention, a simple and rapid assembly is obtained between component parts of the frame, which is applicable to a plurality of possible pairs of components of a frame which can be fixed to each other, and which is configured for reversible or permanent fixing of the components.

Another advantage involves the fact that, as a result of the fixing device of the invention, an assembly which does not require the use of screw type means is obtained, which screw type means would be readily subjected to undesirable automatic unscrewing while the device of the invention ensures permanent fixing, though which may be reversible, of the components.

Another advantage involves the fact that using the device of the invention for connecting parts of a component of a frame allows the dimension of the component to be made adjustable, within specific limits, for example, in the case of an arm or the central bridge for connecting the lens-carrying rims, the length of these particular members can be made adjustable.

Another advantage involves the fact that, as a result of single and different magnets present in each of the fixing elements being provided, it is possible to construct the component parts of the frame from different materials, using, for example, plastics materials without any magnetic property, the magnetic attraction action being assigned to the interaction between the magnets which are different from the frame components and which are received in the seats provided in the fixing elements of these components. Alternatively, it is also possible to use metal materials which are not particularly provided with magnetic properties, thereby providing a wide selection of possible solutions, which therefore also include metal materials which are characterized by high levels of technical characteristics, including high mechanical strength, high resistance to corrosion, durability, ease of working, high level of biocompatibility and absence of any risks to the health of the user, etc., without having to restrict the selection of construction materials only to the metal materials provided with evident magnetic properties, which would offer technical characteristics which are generally limited as a result of their intrinsic limitations.

Another advantage involves being able to make any component parts of a frame readily interchangeable with other component parts which are identical or similar, the replacement operations further also being easy and rapid for the same user.

## Claims

1. A device for mutually fixing component parts of a frame (2) for spectacles, the device comprising a first fixing element which can be associated with a first component part of a frame (2) and which is capable of being connected by sliding coupling inside a second fixing element which can be associated with a second component part of the frame (2), and locking means which are active between the first and second fixing elements, transversely to the coupling direction, for mutually fixing the first and second component parts of a frame, **characterized in that** the first fixing element comprises at least a first seat (10) which is capable of slidingly receiving a respective first magnet (11), in a transverse direction (Y) relative to the coupling direction, the at least first seat (10) being open towards the second fixing element, and **in that** the second fixing element comprises a second seat (13) which is open towards the first fixing element,
**characterized in that** the second fixing element comprises a second magnet (12), the second magnet (12) being provided near the second seat (13) and the second seat (13) having such an extent as to receive, with reduced connection play, at least in the coupling direction, a portion of the first magnet (11) when the first magnet (11) is moved, with partial extraction from the first seat (10), by the magnetic attraction force between the first and second magnets (11, 12) produced by the mutual positioning of the first and second magnets with opposite magnetic polarities so that the first magnet (11), by engaging the first seat (10) and the second seat (13), prevents the relative movement between the first fixing element and the second fixing element, in order to produce a relative locking between the elements.

2. A device according to claim 1, wherein the first fixing element comprises a plurality of the first magnets (11) which are arranged in a respective plurality of the first seats (10), there being slidingly received in each of the first seats (10) the respective first magnet (11), in a transverse direction (Y) relative to the coupling direction, the first seats (10) being open towards the second fixing element, and aligned with each other in the coupling direction with a predetermined spacing from each other, so that the engagement of one of the first magnets (11) in the second seat (13), when magnetically attracted by the second magnet (12), produces a locking between the fixing elements of the type which can be adjusted in the coupling direction.

3. A device according to claim 2, wherein the first seats (10) are aligned with regular pitch in the first fixing element.

4. A device according to any one of the preceding claims, wherein the second magnet (12) is associated with a push-button control (14) which is provided on the second fixing element, the push-button being capable of urging the second magnet (12), in a transverse direction relative to the coupling direction, counter to a resilient return means which acts on the push-button (14), between a first position, in which, with the push-button (14) released, the first magnet (11) which is magnetically connected to the second magnet (12) is engaged in the first seat (10) and in the corresponding second seat (13) for the relative locking between the fixing elements, and a second position, in which, with the push-button (14) pressed, the first magnet (11), with magnetic attraction with the second magnet (12), is moved, by an external pressing action on the push-button (14), completely inside the corresponding first seat (10) in order to allow the relative sliding movement between the first fixing element and the second fixing element in the coupling direction.

5. A device according to any one of claims 1 to 3, comprising a slider type control member (15) which is slidingly guided on the second fixing element in the coupling direction, there being provided in the slider type member (15) the second magnet (12) and a third magnet (16), which are aligned with each other with predetermined spacing from each other, and which are positioned with respective opposite polarities in the transverse direction relative to the coupling direction, the slider type member (15) being movable in translation between a first position, in which there is mutual magnetic connection between the second magnet (12) and the corresponding first magnet (11), in order to produce the relative locking between the fixing elements, and a second position, in which there is mutual repulsion between the third magnet (16) and the corresponding first magnet (11) so that the corresponding first magnet (11) is moved completely inside the corresponding first seat (10) in order to allow the relative sliding movement between the first fixing element and the second fixing element in the coupling direction.

6. A device according to any one of claims 1 to 3, comprising a control member (18) which is rotatably supported on the second fixing element about a rotation axis (Z) which is directed transversely relative to the coupling direction, there being provided on the control member (18) the second magnet (12) and a third magnet (16), which are diametrically aligned with each other and arranged in specularly symmetrical positions with respect to the rotation axis (Z), and having opposite magnetization polarities in the direction parallel with the rotation axis, the control member (18) being rotatable from a first angular position, in which there is mutual magnetic connection between the second magnet (12) and the corresponding first magnet (11), in order to produce the relative locking between the fixing elements, and a second angular position rotated through 180° with respect to the first position, in which there is mutual magnetic repulsion between the third magnet (16) and the corresponding first magnet (11), so that the first magnet (11) is moved completely inside the corresponding first seat (10) in order to allow the relative sliding movement between the first fixing element and the second fixing element in the coupling direction.

7. A device according to any one of claims 1 to 3, comprising a control member (18) which is rotatably supported on the second fixing element about a rotation axis (2) which is directed transversely relative to the coupling direction, there being provided on the control member (18) the second magnet (12) which is centred on the rotation axis and which has opposite magnetization polarities in the direction perpendicular to the rotation axis, the control member (18) being rotatable from a first angular position, in which there is mutual magnetic connection between the second magnet (12) and the corresponding first magnet (11), in order to produce the relative locking between the fixing elements, and a second angular position rotated through 180° with respect to the first position, in which there is mutual magnetic repulsion between the second magnet (12) and the corresponding first magnet (11), so that the first magnet (11) is moved completely inside the corresponding first seat (10) in order to allow the relative sliding movement between the first fixing element and the second fixing element in the coupling direction.

8. A pair of spectacles comprising a frame (2) including a front mount for supporting respective lenses and side arms (5) which are connected in a hinged manner to the front mount, and a fixing device (3) between component parts of the frame (2), constructed according to one or more of the preceding claims.

9. A pair of spectacles according to claim 8, wherein the component parts comprise a first part (6a) and a second part (6b) of each of the side arms (5).

10. A pair of spectacles according to claim 8, wherein the component parts comprise a lens-carrying rim (4) of the front mount and the central connection bridge (5a) between the lens-carrying rims (4).

11. A pair of spectacles according to claim 8, wherein the component parts comprise ends (4a, 4b) of a lens-carrying rim (4), which face each other in the region of an interruption of the rim, the fixing device (3) bringing about the closure of the ends (4a, 4b) for retaining the lens in the rim (4).

## Patentansprüche

1. Vorrichtung zum gegenseitigen Befestigen von Bestandteilen eines Gestells (2) für Brillen, wobei die Vorrichtung ein erstes Befestigungselement, das einem ersten Bestandteil eines Gestells (2) zugeordnet werden kann und das durch gleitende Kopplung innerhalb eines zweiten Befestigungselements, das einem zweiten Bestandteil des Gestells (2) zugeordnet werden kann, verbunden werden kann, und Verriegelungsmittel, die zwischen dem ersten und dem zweiten Befestigungselement quer zur Kopplungsrichtung zum gegenseitigen Befestigen des ersten und des zweiten Bestandteils eines Gestells wirksam sind, umfasst, **dadurch gekennzeichnet, dass** das erste Befestigungselement mindestens einen ersten Sitz (10) umfasst, der einen jeweiligen ersten Magneten (11) in einer Querrichtung (Y) relativ zur Kopplungsrichtung gleitend aufnehmen kann, wobei der mindestens erste Sitz (10) zum zweiten Befestigungselement hin offen ist, und dass das zweite Befestigungselement einen zweiten Sitz (13) umfasst, der zum ersten Befestigungselement hin offen ist,
**dadurch gekennzeichnet, dass** das zweite Befestigungselement einen zweiten Magneten (12) umfasst, wobei der zweite Magnet (12) in der Nähe des zweiten Sitzes (13) bereitgestellt ist und der zweite Sitz (13) eine derartige Ausdehnung aufweist, dass er mit reduziertem Verbindungsspiel mindestens in der Kopplungsrichtung einen Abschnitt des ersten Magneten (11) aufnimmt, wenn der erste Magnet (11) unter teilweiser Extraktion aus dem ersten Sitz (10) durch die magnetische Anziehungskraft zwischen dem ersten und dem zweiten Magneten (11, 12), die durch die gegenseitige Positionierung des ersten und des zweiten Magneten mit entgegengesetzten magnetischen Polaritäten erzeugt wird, bewegt wird, sodass der erste Magnet (11) durch Eingriff des ersten Sitzes (10) und des zweiten Sitzes (13) die relative Bewegung zwischen dem ersten Befestigungselement und dem zweiten Befestigungselement verhindert, um eine relative Verriegelung zwischen den Elementen zu erzeugen.

2. Vorrichtung nach Anspruch 1, wobei das erste Befestigungselement eine Vielzahl der ersten Magneten (11) umfasst, die in einer jeweiligen Vielzahl der ersten Sitze (10) angeordnet sind, wobei in jedem der ersten Sitze (10) der jeweilige erste Magnet (11) in einer Querrichtung (Y) relativ zur Kopplungsrichtung gleitend aufgenommen ist, wobei die ersten Sitze (10) zum zweiten Befestigungselement hin offen sind und in der Kopplungsrichtung mit einem vorbestimmten Abstand voneinander miteinander ausgerichtet sind, sodass der Eingriff eines der ersten Magneten (11) in den zweiten Sitz (13), wenn er vom zweiten Magneten (12) magnetisch angezogen wird, eine Verriegelung zwischen den Befestigungselementen des Typs erzeugt, der in der Kopplungsrichtung eingestellt werden kann.

3. Vorrichtung nach Anspruch 2, wobei die ersten Sitze (10) mit regelmäßiger Teilung im ersten Befestigungselement ausgerichtet sind.

4. Vorrichtung nach einem der vorhergehenden Ansprüche, wobei der zweite Magnet (12) einer Druckknopfsteuerung (14) zugeordnet ist, die am zweiten Befestigungselement bereitgestellt ist, wobei der Druckknopf den zweiten Magneten (12) in einer Querrichtung relativ zur Kopplungsrichtung gegen ein elastisches Rückstellmittel, das auf den Druckknopf (14) wirkt, zwischen einer ersten Position, in der, wenn der Druckknopf (14) freigegeben ist, der erste Magnet (11), der mit dem zweiten Magneten (12) magnetisch verbunden ist, in den ersten Sitz (10) und in den entsprechenden zweiten Sitz (13) für die relative Verriegelung zwischen den Befestigungselementen eingreift, und einer zweiten Position, in der, wenn der Druckknopf (14) gedrückt ist, der erste Magnet (11) mit magnetischer Anziehung mit dem zweiten Magneten (12) durch eine äußere Druckwirkung auf den Druckknopf (14) vollständig innerhalb des entsprechenden ersten Sitzes (10) bewegt wird, um die relative Gleitbewegung zwischen dem ersten Befestigungselement und dem zweiten Befestigungselement in der Kopplungsrichtung zu ermöglichen, drücken kann.

5. Vorrichtung nach einem der Ansprüche 1 bis 3, umfassend ein Schiebertypsteuerelement (15), das am zweiten Befestigungselement in der Kopplungsrichtung gleitend geführt ist, wobei im Schiebertypelement (15) der zweite Magnet (12) und ein dritter Magnet (16) bereitgestellt sind, die mit einem vorbestimmten Abstand voneinander miteinander ausgerichtet sind und die mit jeweiligen entgegengesetzten Polaritäten in der Querrichtung relativ zur Kopplungsrichtung positioniert sind, wobei das Schiebertypelement (15) zwischen einer ersten Position, in der eine gegenseitige magnetische Verbindung zwischen dem zweiten Magneten (12) und dem entsprechenden ersten Magneten (11) besteht, um die relative Verriegelung zwischen den Befestigungselementen zu erzeugen, und einer zweiten Position, in der eine gegenseitige Abstoßung zwischen dem dritten Magneten (16) und dem entsprechenden ersten Magneten (11) besteht, translatorisch beweglich ist, sodass der entsprechende erste Magnet (11) vollständig innerhalb des entsprechenden ersten Sitzes (10) bewegt wird, um die relative Gleitbewegung zwischen dem ersten Befestigungselement und dem zweiten Befestigungselement in der Kopplungsrichtung zu ermöglichen.

6. Vorrichtung nach einem der Ansprüche 1 bis 3, umfassend ein Steuerelement (18), das am zweiten Befestigungselement um eine Drehachse (Z) drehbar gelagert ist, die quer zur Kopplungsrichtung ausgerichtet ist, wobei am Steuerelement (18) der zweite Magnet (12) und ein dritter Magnet (16) bereitgestellt sind, die diametral miteinander ausgerichtet und in spiegelsymmetrischen Positionen in Bezug auf die Drehachse (Z) angeordnet sind und entgegengesetzte Magnetisierungspolaritäten in der Richtung parallel zur Drehachse aufweisen, wobei das Steuerelement (18) aus einer ersten Winkelposition, in der eine gegenseitige magnetische Verbindung zwischen dem zweiten Magneten (12) und dem entsprechenden ersten Magneten (11) besteht, um die relative Verriegelung zwischen den Befestigungselementen zu erzeugen, und einer zweiten Winkelposition, die um 180° in Bezug auf die erste Position gedreht ist, in der eine gegenseitige magnetische Abstoßung zwischen dem dritten Magneten (16) und dem entsprechenden ersten Magneten (11) besteht, drehbar ist, sodass der erste Magnet (11) vollständig innerhalb des entsprechenden ersten Sitzes (10) bewegt wird, um die relative Gleitbewegung zwischen dem ersten Befestigungselement und dem zweiten Befestigungselement in der Kopplungsrichtung zu ermöglichen.

7. Vorrichtung nach einem der Ansprüche 1 bis 3, umfassend ein Steuerelement (18), das am zweiten Befestigungselement um eine Drehachse (2) drehbar gelagert ist, die quer zur Kopplungsrichtung ausgerichtet ist, wobei am Steuerelement (18) der zweite Magnet (12) bereitgestellt ist, der auf der Drehachse zentriert ist und der entgegengesetzte Magnetisierungspolaritäten in der Richtung senkrecht zur Drehachse aufweist, wobei das Steuerelement (18) aus einer ersten Winkelposition, in der eine gegenseitige magnetische Verbindung zwischen dem zweiten Magneten (12) und dem entsprechenden ersten Magneten (11) besteht, um die relative Verriegelung zwischen den Befestigungselementen zu erzeugen, und einer zweiten Winkelposition, die um 180° in Bezug auf die erste Position gedreht ist, in der eine gegenseitige magnetische Abstoßung zwischen dem zweiten Magneten (12) und dem entsprechenden ersten Magneten (11) besteht, drehbar ist, sodass der erste Magnet (11) vollständig innerhalb des entsprechenden ersten Sitzes (10) bewegt wird, um die relative Gleitbewegung zwischen dem ersten Befestigungselement und dem zweiten Befestigungselement in der Kopplungsrichtung zu ermöglichen.

8. Brille, umfassend einen Rahmen (2), der eine vordere Halterung zum Tragen von jeweiligen Linsen und Seitenarmen (5), die gelenkig mit der vorderen Halterung verbunden sind, und eine Befestigungsvorrichtung (3) zwischen Komponententeilen des Rahmens (2), die nach einem oder mehreren der vorhergehenden Ansprüche konstruiert ist, umfasst.

9. Brille nach Anspruch 8, wobei die Komponententeile einen ersten Teil (6a) und einen zweiten Teil (6b) jedes der Seitenarme (5) umfassen.

10. Brille nach Anspruch 8, wobei die Komponententeile einen linsentragenden Rand (4) der vorderen Halterung und die mittlere Verbindungsbrücke (5a) zwischen den linsentragenden Rändern (4) umfassen.

11. Brille nach Anspruch 8, wobei die Komponententeile Enden (4a, 4b) eines linsentragenden Rands (4) umfassen, die im Bereich einer Unterbrechung des Rands einander zugewandt sind, wobei die Befestigungsvorrichtung (3) den Verschluss der Enden (4a, 4b) zum Halten der Linse in dem Rand (4) bewirkt.

## Revendications

1. Dispositif pour fixer mutuellement des éléments d'une monture (2) pour lunettes, le dispositif comprenant un premier élément de fixation qui peut être associé à un premier élément d'une monture (2) et qui est capable d'être connecté par couplage coulissant à l'intérieur d'un deuxième élément de fixation qui peut être associé à un deuxième élément de la monture (2), et des moyens de verrouillage qui sont actifs entre le premier et le deuxième élément de fixation, transversalement à la direction de couplage, pour fixer mutuellement le premier et le deuxième élément d'un cadre, **caractérisé en ce que** le premier élément de fixation comprend au moins un premier siège (10) capable de recevoir par coulissement un premier aimant respectif (11), dans une direction transversale (Y) par rapport à la direction de couplage, le premier siège au moins (10) étant ouvert vers le deuxième élément de fixation, et **en ce que** le deuxième élément de fixation comprend un deuxième siège (13) qui est ouvert vers le premier élément de fixation,
**caractérisé en ce que** le deuxième élément de fixation comprend un deuxième aimant (12), le deuxième aimant (12) étant prévu à proximité du deuxième siège (13) et le deuxième siège (13) ayant une étendue telle qu'il reçoit, avec un jeu de connexion réduit, au moins dans la direction de couplage, une partie du premier aimant (11) lorsque le premier aimant (11) est déplacé, avec une extraction partielle du premier siège (10), par la force d'attraction magnétique entre le premier et le deuxième aimant (11, 12) produite par le positionnement mutuel du premier et du deuxième aimant avec des polarités magnétiques opposées, de sorte que le premier aimant (11), en engageant le premier siège (10) et le deuxième siège (13), empêche le déplacement relatif entre le premier élément de fixation et le deuxième élément de fixation, afin de produire un verrouillage relatif entre les éléments.

2. Dispositif selon la revendication 1, dans lequel le premier élément de fixation comprend une pluralité de premiers aimants (11) qui sont disposés dans une pluralité respective de premiers sièges (10), le premier aimant (11) étant reçu de manière coulissante dans chacun des premiers sièges (10), dans une direction transversale (Y) par rapport à la direction de couplage, les premiers sièges (10) étant ouverts vers le deuxième élément de fixation et alignés les uns par rapport aux autres dans la direction du couplage avec un écart prédéterminé, de sorte que l'engagement de l'un des premiers aimants (11) dans le deuxième siège (13), lorsqu'il est attiré magnétiquement par le deuxième aimant (12), produit un verrouillage entre les éléments de fixation du type qui peut être ajusté dans la direction de couplage.

3. Dispositif selon la revendication 2, dans lequel les premiers sièges (10) sont alignés avec un pas régulier dans le premier élément de fixation.

4. Dispositif selon l'une quelconque des revendications précédentes, dans lequel le deuxième aimant (12) est associé à un bouton-poussoir de commande (14) qui est prévu sur le deuxième élément de fixation, le bouton-poussoir étant capable de pousser le deuxième aimant (12), dans une direction transversale par rapport à la direction de couplage, à l'encontre d'un moyen de rappel élastique qui agit sur le bouton-poussoir (14), entre une première position, dans laquelle, avec le bouton-poussoir (14) libéré, le premier aimant (11) qui est magnétiquement connecté au deuxième aimant (12) est engagé dans le premier siège (10) et dans le deuxième siège correspondant (13) pour le verrouillage relatif entre les éléments de fixation, et une deuxième position dans laquelle, lorsque le bouton-poussoir (14) est enfoncé, le premier aimant (11), par attraction magnétique avec le deuxième aimant (12), est déplacé, par une action de pression externe sur le bouton-poussoir (14), complètement à l'intérieur du premier siège (10) correspondant afin de permettre le déplacement relatif de coulissement entre le premier élément de fixation et le deuxième élément de fixation dans la direction du couplage.

5. Dispositif selon l'une quelconque des revendications 1 à 3, comprenant un élément de commande de type coulissant (15) qui est guidé de manière coulissante sur le deuxième élément de fixation dans la direction de couplage, le deuxième aimant (12) et un troisième aimant (16) étant prévus dans l'élément de type coulissant (15), qui sont alignés l'un avec l'autre avec un espacement prédéterminé, et qui sont positionnés avec des polarités opposées respectives dans la direction transversale par rapport à la direction de couplage, l'élément de type coulissant (15) étant déplaçable en translation entre une première position, dans laquelle il y a une connexion magnétique mutuelle entre le deuxième aimant (12) et le premier aimant (11) correspondant, afin de produire le verrouillage relatif entre les éléments de fixation, et une deuxième position, dans laquelle il y a une répulsion mutuelle entre le troisième aimant (16) et le premier aimant (11) correspondant, de sorte que le premier aimant (11) correspondant est déplacé complètement à l'intérieur du premier siège (10) correspondant afin de permettre le déplacement de coulissement relatif entre le premier élément de fixation et le deuxième élément de fixation dans la direction du couplage.

6. Dispositif selon l'une quelconque des revendications 1 à 3, comprenant un élément de commande (18) qui est supporté en rotation sur le deuxième élément de fixation autour d'un axe de rotation (Z) qui est dirigé transversalement par rapport à la direction de couplage, le deuxième aimant (12) et un troisième aimant (16) étant placés sur l'élément de commande (18), qui sont diamétralement alignés l'un sur l'autre et disposés dans des positions spéculairement symétriques par rapport à l'axe de rotation (Z), et ayant des polarités d'aimantation opposées dans la direction parallèle à l'axe de rotation, l'élément de commande (18) étant rotatif à partir d'une première position angulaire, dans laquelle il y a une connexion magnétique mutuelle entre le deuxième aimant (12) et le premier aimant (11) correspondant, afin de produire le verrouillage relatif entre les éléments de fixation, et une deuxième position angulaire tournée de 180° par rapport à la première position, dans laquelle il y a une répulsion magnétique mutuelle entre le troisième aimant (16) et le premier aimant (11) correspondant, de sorte que le premier aimant (11) est déplacé complètement à l'intérieur du premier siège (10) correspondant afin de permettre le déplacement de coulissement relatif entre le premier élément de fixation et le deuxième élément de fixation dans la direction du couplage.

7. Dispositif selon l'une quelconque des revendications 1 à 3, comprenant un organe de commande (18) qui est supporté de manière rotative sur le deuxième élément de fixation autour d'un axe de rotation (2) qui est dirigé transversalement par rapport à la direction de couplage, le deuxième aimant (12) qui est centré sur l'axe de rotation et qui a des polarités d'aimantation opposées dans la direction perpendiculaire à l'axe de rotation étant fourni sur l'organe de commande (18), l'organe de commande (18) étant rotatif à partir d'une première position angulaire, dans laquelle il y a une connexion magnétique mutuelle entre le deuxième aimant (12) et le premier aimant (11) correspondant, afin de produire le verrouillage relatif entre les éléments de fixation, et une deuxième position angulaire tournée de 180° par rapport à la première position, dans laquelle il y a une répulsion magnétique mutuelle entre le deuxième aimant (12) et le premier aimant (11) correspondant, de sorte que le premier aimant (11) est déplacé complètement à l'intérieur du premier siège (10) correspondant afin de permettre le déplacement de coulissement relatif entre le premier élément de fixation et le deuxième élément de fixation dans la direction du couplage.

8. Paire de lunettes comprenant une monture (2) comprenant un support avant pour soutenir les lentilles respectives et des branches latérales (5) qui sont connectées de manière articulée à le support avant, et un dispositif de fixation (3) entre les parties constitutives de la monture (2), construite selon une ou plusieurs des revendications précédentes.

9. Paire de lunettes selon la revendication 8, dans laquelle les éléments constitutifs comprennent une première partie (6a) et une deuxième partie (6b) de chacun des bras latéraux (5).

10. Paire de lunettes selon la revendication 8, dans laquelle les éléments constitutifs comprennent une monture porte-lentille (4) du support avant et l'arcade de connexion centrale (Sa) entre les montures porte-lentilles (4).

11. Paire de lunettes selon la revendication 8, dans laquelle les éléments constitutifs comprennent les extrémités (4a, 4b) d'une monture porte-lentille (4), qui se font face dans la région d'une interruption de la monture, le dispositif de fixation (3) provoquant la fermeture des extrémités (4a, 4b) pour retenir la lentille dans la monture (4).
